# FASCICULE DE BREVET EUROPEEN

(11) **EP 2 102 582 B1**
(45) Date de publication et mention de la délivrance du brevet: **16.03.2016**
(21) Numéro de dépôt: 07872026.5
(22) Date de dépôt: 21.12.2007
(51) Int. Cl.: G01B 7/16, G01B 11/16, G01B 21/32

(54) **PROCEDE ET SYSTEME D'IDENTIFICATION DE RISQUE DE DEFAILLANCE D'UN OUVRAGE DE CONFINEMENT**
VERFAHREN UND SYSTEM ZUR BESTIMMUNG DES AUSFALLRISIKOS EINER SICHERHEITSHÜLLE
METHOD AND SYSTEM FOR IDENTIFYING THE FAILURE RISK OF A CONTAINEMENT STRUCTURE

(30) Priorité: 22.12.2006 FR 0611330
(43) Date de publication de la demande: 23.09.2009
(73) Titulaire: Oxand, 77210 Avon (FR)
(72) Inventeur: CROUIGNEAU, Sophie, F-75012 Paris (FR); AUGE, Laurent, F-75011 Paris (FR); GERARD, Bruno, F-77690 Montigny sur Le Loing (FR); LASNE, Marc, F-77300 Fontainebleau (FR)
(74) Mandataire: Pontet Allano & Associes
(86) Numéro de dépôt international: PCT/FR2007/052617
(87) Numéro de publication internationale: WO 2008/084177

(56) Documents cités:
- WO-A-00/12962
- WO-A-2006/071227
- GB-A- 2 250 811
- US-A- 3 916 673

## Description

La présente invention concerne un procédé d'identification de risque de défaillance d'un ouvrage de confinement ou de stockage en béton. Elle vise également un système mettant en oeuvre ce procédé.

Cette invention vise plus particulièrement un procédé et un système d'identification de risque de défaillance des fonctions de confinement d'un ouvrage de confinement en béton, prévu par exemple pour stocker ou entreposer des déchets faiblement et moyennement radioactifs, ou des gaz liquéfiés.

Une préoccupation majeure des exploitants d'ouvrages de confinement, tels que des ouvrages de stockage de déchets faiblement et moyennement radioactifs ou de gaz liquéfiés, est de maîtriser les risques de dégradation, d'une part des propriétés mécaniques de la structure en évitant la ruine des composants à court et à long terme, et d'autre part des propriétés de confinement en évitant la détérioration des composants sur de longues durées pouvant atteindre plusieurs centaines d'années.

Les systèmes de monitoring d'ouvrage actuellement existants permettent d'évaluer :
- les déformations théoriques attendues obtenues par calculs estimatifs réalisés en fonction de données relatives à l'ouvrage de confinement ; et
- les déformations de l'ouvrage de confinement observées lors de la phase fonctionnelle de confinement. Ces déformations sont mesurées lors de la phase de stockage par des moyens de mesures comprenant des capteurs adéquats.
Par phase fonctionnelle de stockage de l'ouvrage, on entend la phase de stockage à proprement dit de l'ouvrage, c'est-à-dire la phase pendant laquelle l'ouvrage stocke un volume fini du produit à stocker. Cette phase correspond à la fonction principale de l'ouvrage de confinement qui est le stockage d'un produit et peut être prévue pour durer plusieurs centaines d'années.

On peut ainsi définir, par rapport à la phase fonctionnelle de stockage, une phase de remplissage de l'ouvrage par le produit à stocker et une phase de vidage (de vidange ou de désemplissement) de l'ouvrage. La phase de remplissage correspond à la phase pendant laquelle l'ouvrage de confinement reçoit le produit destiné à être stocké par cet ouvrage et la phase de vidage correspond à la phase pendant laquelle l'ouvrage est au moins partiellement vidé du produit stocké. Bien entendu, la phase de remplissage précède la phase fonctionnelle de stockage et la phase de vidage vient après la phase fonctionnelle. Il peut y avoir plusieurs phases de remplissage pendant la vie d'un ouvrage de confinement, notamment pour les ouvrages de stockage de gaz liquéfiés.

Le document WO 2006/071227 A1 divulgue un procédé et un système d'inspection de conteneurs métalliques servant à transporter des produits.

Le document US 3 916 673 A divulgue un système pour tester de manière non destructive des canalisations déformables.

Un but de l'invention est de proposer un procédé et un système d'identification de risques de défaillance d'un ouvrage de confinement plus performants et plus complets que les procédés et systèmes existants.

La présente invention permet d'atteindre ce but par un procédé d'identification de risques de défaillance d'un ouvrage de confinement, notamment d'un ouvrage de confinement essentiellement en béton, destiné à stocker un produit, ledit procédé comprenant les étapes suivantes :
- détermination, en fonction de données relatives audit ouvrage et/ou audit produit, d'un comportement théorique prévu dudit ouvrage lors des phases de remplissage dudit ouvrage par ledit produit à stocker ;
- détermination d'un comportement réel dudit ouvrage lors de ladite phase de remplissage dudit ouvrage par ledit produit ; et
- détermination, par comparaison desdits comportements théorique et réel, des risques de défaillance dudit ouvrage.

A la différence des procédés et systèmes actuels, le procédé selon l'invention permet l'identification des risques de défaillance d'un ouvrage de confinement, et notamment un ouvrage de confinement en béton, par la comparaison du comportement théorique et réel de cet ouvrage pendant la phase de remplissage de l'ouvrage par le produit à stocker. En effet, ces ouvrages, généralement composés d'un ensemble « radier / voile / dalle de fermeture » en béton, peuvent être particulièrement vulnérables lors de leur phase de remplissage, pendant laquelle leur état de contraintes évolue progressivement. Cet état pouvant se révéler être le plus sévère dans le cycle de vie dudit ouvrage.

En se basant essentiellement sur la phase de remplissage d'un ouvrage de confinement, le procédé selon l'invention permet de surveiller et de fournir des indicateurs d'aide à la décision concernant la phase de remplissage d'ouvrages de stockage afin de préserver leurs fonctions de confinement à court et long terme. En effet, par la mesure du comportement de l'ouvrage en phase de remplissage, le procédé selon l'invention permet :
- d'anticiper les défaillances éventuelles, de suivre les risques liés à la tenue de la structure, et donc de maîtriser l'exploitation des ouvrages de confinement pour la gestion des risques de défaillance à court terme;
- de conforter les hypothèses de dimensionnement des ouvrages à venir ;
- de tracer le comportement de l'ouvrage pendant cette phase de remplissage, et ainsi de fournir un dossier complet pouvant être consulté pendant toute la durée de vie des ouvrages pour la gestion des risques de défaillance à long terme ;

Ainsi, le procédé selon l'invention rend possible le contrôle des risques et des impacts à court et long terme de cette phase de remplissage, en surveillant le comportement des composants sous chargement progressif.

Avantageusement, la détermination du comportement théorique de l'ouvrage peut comprendre au moins une simulation dudit comportement théorique réalisée par des moyens de simulation, tels que résolution analytique ou modalisation par éléments finis. La simulation prend en compte des données relatives à l'ouvrage, dimensions, composants, matériaux et des données relatives au produit à stocker ainsi que des données relatives au procédé de remplissage de l'ouvrage par le produit. Le comportement théorique de l'ouvrage correspond au comportement de l'ouvrage que l'on prévoit lors d'une phase de remplissage de l'ouvrage par le produit à stocker.

La détermination du comportement réel de l'ouvrage peut comprendre au moins une mesure dudit comportement réel réalisée sur l'ouvrage lors du remplissage dudit ouvrage par le produit à stocker. Le comportement réel de l'ouvrage correspond au comportement de l'ouvrage pendant qu'il est rempli par le produit à stocker.

Avantageusement, la détermination du comportement théorique et/ou réel de l'ouvrage peut comprendre une détermination d'au moins une déformation d'au moins un composant dudit ouvrage lors de la phase de remplissage. Pour la détermination du comportement théorique, la déformation est déterminée de manière théorique, par exemple par simulation à partir de données relatives à l'ouvrage ou des données relatives à une déformation constatée sur un ouvrage similaire lors de sa phase de remplissage. Les incertitudes sur les paramètres d'entrée tels que la résistance des matériaux pourront être prises en compte via une approche fiabiliste. Pour la détermination du comportement réel, la déformation est déterminée par mesure sur l'ouvrage pendant la phase de remplissage.

La déformation en question peut comprendre au moins une déformation élastique d'au moins un composant de l'ouvrage. Dans ce cas, l'étape de détermination du comportement réel de l'ouvrage pendant la phase de remplissage peut comprendre une mesure de cette déformation élastique par des capteurs adéquatement placés sur ledit ouvrage.

La déformation en question peut aussi comprendre une déformation par micro dégradation d'au moins un composant dudit ouvrage. Dans ce cas l'étape de détermination du comportement réel de l'ouvrage peut comprendre au moins une mesure acoustique d'une déformation par micro dégradation. Ces mesures sont bien connues de l'homme du métier.

Par micro dégradation on entend une micro fissure ou une micro fracture pouvant se produire au niveau d'un composant de l'ouvrage de confinement, soit en partie interne au matériau, soit en partie visible externe.

Avantageusement, le procédé selon l'invention peut en outre comprendre une étape de proposition d'une solution de sécurisation dudit ouvrage en fonction des risques de défaillance déterminés. Parmi les solutions de sécurisation on peut citer :
- un renforcement de l'ouvrage à des emplacements particuliers ;
- un arrête du remplissage de l'ouvrage à un niveau déterminé en fonction des risques de défaillance ;
- une augmentation de la surveillance de l'ouvrage à des emplacements particuliers ; ou
- un arrêt partiel ou total d'exploitation.

Les données relatives à l'ouvrage de confinement peuvent comprendre :
- des données expérimentales relatives à la phase de remplissage d'un ouvrage similaire ;
- des données de test ou de simulations ;
- des données relatives à la composition de l'ouvrage ;
- des données relatives à chacun des composants de l'ouvrage ;

Par ailleurs, le procédé selon l'invention peut comprendre un stockage, sur une base de données, d'informations relatives au comportement réel de l'ouvrage lors de la phase de remplissage. Ces données peuvent être utilisées ultérieurement pour déterminer le comportement théorique d'un ouvrage de confinement similaire pendant la phase de remplissage lors de la détermination de risques de défaillance de cet ouvrage.

Dans un mode d'utilisation particulier, le procédé selon l'invention peut être mis en oeuvre pour l'identification de risques de défaillance d'un ouvrage de confinement de déchets radioactifs, ou d'un ouvrage de stockage de gaz liquéfiés. Ces ouvrages de confinement sont, la plupart du temps, des ouvrages en béton se présentant sous la forme d'un ensemble « radier/voile/dalle de fermeture ».

Le procédé selon l'invention peut avantageusement comprendre une détermination d'au moins une zone critique de l'ouvrage de confinement. La détermination d'une telle zone peut se faire par une analyse de risques consistant en une détermination d'au moins un mode de défaillance de l'ouvrage par analyse d'un dossier de conception et de construction de l'ouvrage, d'une modélisation de l'ouvrage en éléments finis en fonction des données relatives à l'ouvrage de confinement, et/ou par la prise en compte des données relatives à une expérience sur un ouvrage similaire ou identique, c'est-à-dire des données obtenues sur un ouvrage de confinement similaire ou identique utilisé lors d'une expérience passée. La détermination des zones critiques permet de concentrer et limiter l'étude de l'ouvrage de confinement aux zones critiques. La détermination du comportement théorique et réel de l'ouvrage pendant la phase de remplissage peut ainsi être réalisée pour une ou plusieurs zones critiques de l'ouvrage préalablement déterminées, ce qui diminue les mesures à effectuer pour la détermination du comportement réel et les calculs à mener pour la détermination du comportement théorique.

Par « zones critiques » on désigne les zones de l'ouvrage de confinement, qui présentent une probabilité plus importante de défaillance par rapport aux autres zones de l'ouvrage, et/ou dont la défaillance entraînerait des conséquences plus sévères du point de vue de la sécurité, de l'environnement ou des pertes d'exploitation.

Bien entendu, le procédé selon l'invention peut être mis en oeuvre pour l'identification de risques de défaillance d'un ouvrage de confinement lors d'une pluralité de phases de remplissage dudit ouvrage.

Le procédé selon l'invention peut en outre comprendre une détermination de risques de défaillance de l'ouvrage de confinement pendant une phase de vidage, de l'ouvrage confinement. Dans ce cas, les comportements théoriques et réels de l'ouvrage de confinement seront calculés pour la phase de vidage de l'ouvrage de confinement. Les zones critiques de l'ouvrage seront aussi calculées pour la phase de vidage de l'ouvrage de confinement. Les différentes étapes et opérations du procédé selon l'invention, décrites ci-dessus pour la phase de remplissage de l'ouvrage de confinement, seront alors appliquées de manière sensiblement similaire à la phase de vidage de l'ouvrage de confinement. Les données et les caractéristiques prises en compte dans les calculs du comportement théorique concerneront la phase de vidage et les déformations réelles pour la détermination du comportement réel seront mesurées lors de la phase de vidage.

Dans la cas d'un exemple d'application non limitatif, le procédé selon l'invention peut être appliqué à des ouvrages de confinement, utilisés à moyen terme, tels que les réservoirs de stockage de gaz naturel liquéfié (GNL). Les réservoirs de GNL sont utilisés comme des ouvrages tampon permettant de réguler le stockage du GNL entre son approvisionnement par des méthaniers et sa distribution progressive vers les consommateurs. Ils sont donc amenés à être remplis ou vidés souvent sans qu'il y ait nécessairement une alternance entre les phases de remplissage et les phases de vidage. Le procédé selon l'invention permet de déterminer les risques de défaillance d'un tel ouvrage de confinement en réalisant une surveillance de cet ouvrage portant sur des phases de remplissage et vidage.

Selon un autre aspect de l'invention il est proposé un système d'identification de risques de défaillance d'un ouvrage de confinement, notamment d'un ouvrage de confinement essentiellement en béton, destiné à stocker un produit, ledit système comprenant :
- des moyens pour déterminer, en fonction de données relatives audit ouvrage et/ou audit produit, un comportement théorique prévu dudit ouvrage lors d'une phase de remplissage dudit ouvrage par ledit produit à stocker ;
- des moyens pour déterminer un comportement réel dudit ouvrage lors de ladite phase de remplissage dudit ouvrage par ledit produit ; et
- des moyens de calcul pour déterminer, par comparaison desdits comportements théorique et réel, des risques de défaillance dudit ouvrage.

Les moyens pour déterminer le comportement réel de l'ouvrage comprennent des capteurs prévus pour mesurer une déformation élastique d'au moins un composant dudit ouvrage. Ces capteurs peuvent soit être coulés dans le béton des composants d'un ouvrage en béton (montage prenant appui sur les armatures si béton armé), soit être montés sur les faces externes des composants de l'ouvrage de manière accessible pour garantir leur maintenance tout au long de la durée de vie des ouvrages. Ce choix de capteurs peut par exemple dépendre de la présence ou non de matières organiques dans les capteurs. Dans un mode de réalisation particulier ces capteurs peuvent comprendre des capteurs de type fibre optique, des jauges de déplacement ou des clinomètres.

Les moyens pour déterminer le comportement réel de l'ouvrage peuvent aussi comprendre des capteurs prévus pour mesurer une déformation par micro dégradation d'au moins un composant dudit ouvrage. Dans un mode de réalisation particulier ces moyens peuvent comprendre par exemple des capteurs acoustiques adéquatement placés pour déterminer une déformation par micro dégradation d'un composant de l'ouvrage. En effet, une micro dégradation peut, au dessus d'un certain niveau, produire un signal acoustique pouvant être mesuré par des capteurs acoustiques. En utilisant plusieurs capteurs acoustiques on peut déterminer l'emplacement de la micro dégradation par triangulation, par exemple.

D'autres avantages et caractéristiques de l'invention apparaîtront à l'examen de la description détaillée d'un mode de mise en oeuvre nullement limitatif, et des dessins annexés sur lesquels :
- la figure 1 est une représentation schématique d'un ouvrage de confinement ;
- la figure 2 est un organigramme de principe de détermination de risques défaillance d'un ouvrage de confinement conformément au procédé selon l'invention;
- la figure 3 est une représentation des déformations d'un ouvrage de confinement lors de la phase de remplissage de cet ouvrage ;
- la figure 4 est une représentation schématique d'un système de détermination des risques de défaillance d'un ouvrage de confinement grâce au procédé selon l'invention ;
- la figure 5 est une représentation de l'organigramme de la figure 2, où la détermination des risques de défaillance est limitée à des zones critiques ; et
- la figure 6 est une représentation schématique d'un réservoir de stockage de gaz naturel liquéfié (GNL).

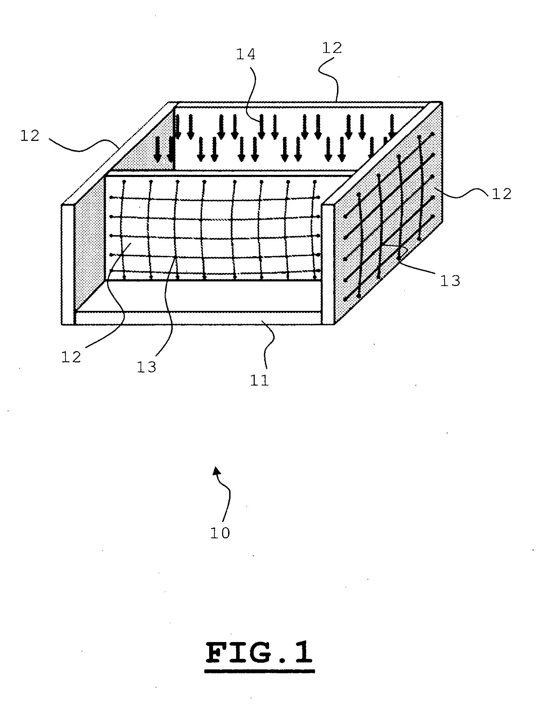

La figure 1 est une représentation d'un ouvrage 10 de confinement de déchets faiblement ou moyennement radioactifs. L'ouvrage de confinement 10 se présente sous la forme d'un réservoir parallélépipédique en béton armé comportant un radier 11, et des voiles 12.

Cet ouvrage de stockage 10 de déchets radioactifs est muni de capteurs 13 qui sont soit coulés dans le béton des composants et notamment des voiles 12 par un montage prenant appui sur les armatures, soit montés sur les faces externes des voiles 12 en vue d'un démontage une fois le remplissage terminé. Ce choix dépend de la présence ou non de matières organiques dans les capteurs. Dans l'exemple présent, les capteurs 13 sont composés de capteurs de type fibre optique ou d'inclinomètres prévus pour mesurer les déformations des voiles lors du remplissage du réservoir 10 ainsi que de capteurs acoustiques prévues pour mesurer les déformations par micro dégradations : micro fissures ou micro fractures. Le réservoir 10 sera rempli dans le sens des flèches 14 montrées en figure 1.

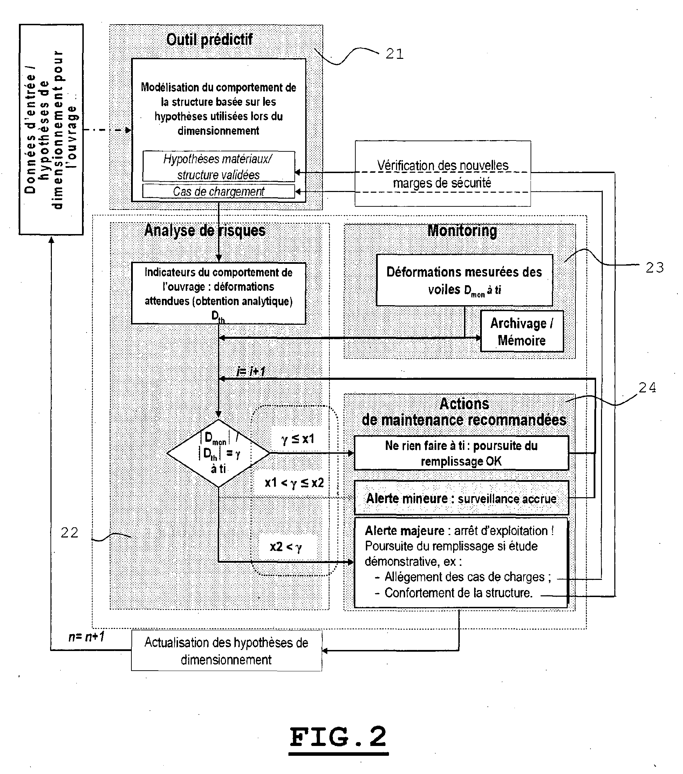

La figure 2 montre un organigramme de principe de détermination de risques défaillance de l'ouvrage de confinement 10 conformément au procédé selon l'invention. En fonction des données d'entrée relatives au réservoir 10, au produit à stocker ainsi qu'au procédé de remplissage du réservoir 10 et des hypothèses de dimensionnement, un outil prédictif 21 permet de modéliser de manière analytique le comportement théorique du réservoir 10 et de fournir des indicateurs relatifs à ce comportement lors de la phase de remplissage. Parmi ces indicateurs, on trouve des indicateurs relatifs aux déformations théoriques attendues Dₜₕ sur le réservoir 10. Ces indicateurs sont communiqués à un module 22 d'analyse et de détermination de risques de défaillance.

On vient remplir ce réservoir avec un fluide hétérogène, radioactif, de densité variable, en plusieurs étapes. Lors de la phase de remplissage un bloc monitoring 23, fournit les déformations Dₘₒₙ réelles mesurées grâce aux capteurs 13 placés sur le réservoir 10. Ces déformations Dₘₒₙ sont, d'une part enregistrées pour une utilisation ultérieure lors de la modélisation des déformations théoriques d'un autre ouvrage de confinement similaire au réservoir 10, et d'autre part envoyées vers le module 22 d'analyse et de détermination de risques de défaillance.

Le bloc 22 détermine alors, par comparaison des déformations théoriques Dₜₕ calculées par l'outil prédictif 21 et des déformations mesurées Dₘₒₙ lors du monitoring de la phase de remplissage par le module 23, les risques de défaillance du réservoir 10. En fonction de ces risques, un bloc 24 propose des solutions de sécurisation du réservoir 10 en fonction des risques de défaillance déterminés.

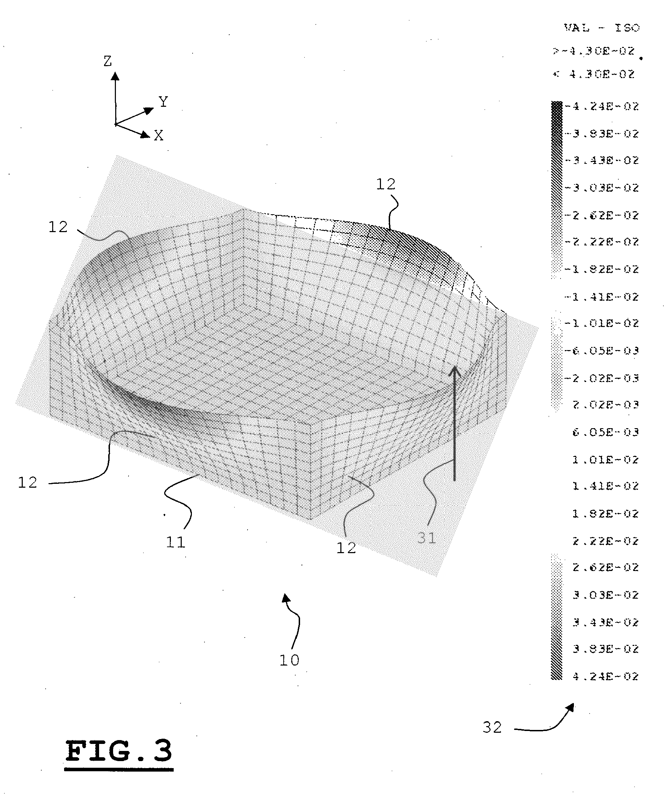

Nous nous intéressons dans notre exemple à la déformation subie par un voile 12 du réservoir 10, en son axe médian représenté par la flèche 31 sur la figure 3, tout au long de la phase de remplissage. La figure 3 est une représentation de la modélisation de la déformation des voiles 12 de ce réservoir 10 conformément aux hypothèses réglementaires de dimensionnement. Cette modélisation, réalisée par l'outil prédictif 21, permet d'obtenir les déformations théoriques Dₜₕ prévisibles de chacun des voiles 12 pour une hauteur du remplissage mis en place. Les déformations théoriques des voiles 12 sont déterminées par rapport à un axe 32 représenté sur cette figure 3. A l'instant tᵢ, la hauteur hᵢ de remplissage a été mise en place : à cette hauteur hᵢ correspond un état de déformation bien spécifique des voiles 12, prédéterminé par les résultats de la modélisation. Plusieurs modélisations sont réalisées, pour un nombre pertinent de hᵢ, fonction de la hauteur totale des voiles 12. Ainsi, à l'instant tᵢ, on possède l'ensemble des déplacements théoriques D_{th(hi, z)} du voile 12 le long de l'axe z. Le tableau ci-dessous donne les déformations théoriques D_{th(hi, z)} théoriques prévues pour les voiles 12 du réservoir 10 en fonction de la hauteur de remplissage :

| Déplacements théoriques D_{th(hi,z)} réglementaires prévus le long du voile à l'instant tᵢ (résultats des modélisations, suivant Ox) | | hᵢ : hauteur du remplissage à l'instant tᵢ [m] | | | | | | |
|---|---|---|---|---|---|---|---|---|
| | | 0,2 | 0,4 | 0,6 | 0,8 | 1 | 1,2 | ... |
| ordonnée du voile z [m] | 0 | 0,0 | 0,0 | 0,0 | 0,0 | 0,0 | 0,0 | ... |
| | 0,2 | 0,3 | 0,4 | 0,5 | 0,5 | 0,5 | 0,6 | ... |
| | 0,4 | 0,2 | 0,5 | 0,6 | 0,6 | 0,7 | 0,7 | ... |
| | 0,6 | 0,1 | 0,4 | 0,5 | 0,6 | 0,7 | 0,8 | ... |
| | 0,8 | 0,0 | 0,2 | 0,3 | 0,5 | 0,7 | 0,8 | ... |
| | 1 | 0,0 | 0,1 | 0,2 | 0,3 | 0,5 | 0,9 | ... |
| | 1,2 | 0,0 | 0,0 | 0,1 | 0,2 | 0,4 | 1,0 | ... |
| | 1,4 | 0,0 | 0,0 | 0,0 | 0,2 | 0,3 | 0,8 | ... |
| | 1,6 | 0,0 | 0,0 | 0,0 | 0,0 | 0,2 | 0,3 | ... |
| | 1,8 | 0,0 | 0,0 | 0,0 | 0.0 | 0,1 | 0,1 | ... |
| | 2 | 0,0 | 0,0 | 0,0 | 0,0 | 0,0 | 0,0 | ... |
| | ... | ... | ... | ... | ... | ... | ... | ... |

Ces déformations théoriques D_{th(hi, z)}, obtenues par l'outil prédictif 21 par simulation analytique sont fournies au module 22 d'analyse et de détermination de risques de défaillance.

Par ailleurs, a chaque instant tᵢ correspondant à la mise en place d'une hauteur hᵢ de remplissage, une saisie des données des capteurs 13 est réalisée et sauvegardée par le module 23 de monitoring. On obtient ainsi les déplacements réels D_{mon(hi, z)} le long de l'axe médian 31 des voiles 12. Ces déformations D_{mon(hi, z)} sont fournies au module 22 d'analyse et de détermination de risques de défaillance.

Ainsi le module 22 d'analyse et de détermination de risques de défaillances reçoit :
- les déformations théoriques D_{th(hi, z)}, obtenues par l'outil prédictif 21 par simulation analytique ; et
- les déformations réelles D_{mon(hi, z)}, obtenues par le module 23 de monitoring grâce aux capteurs 13.
A chaque instant tᵢ les déformations théoriques D_{th(hi, z)} et réelles D_{mon(hi, z)} sont comparées. On compare ainsi l'état de déformée théorique du voile avec son état de déformée réel : concrètement, pour chaque ordonnée z, on compare *D_{th(hi, z)}* et *D_{mon(hi, z)}.*

Les risques de défaillance des voiles 12, calculés par le module 22, sont directement liés aux écarts entre D_{th(hi, z)} et D_{mon(hi, z)}. A titre d'exemple, on peut définir 3 niveaux de risque, liés à trois niveaux d'écart, et les solutions de sécurisation recommandée pour chaque niveau de risque :

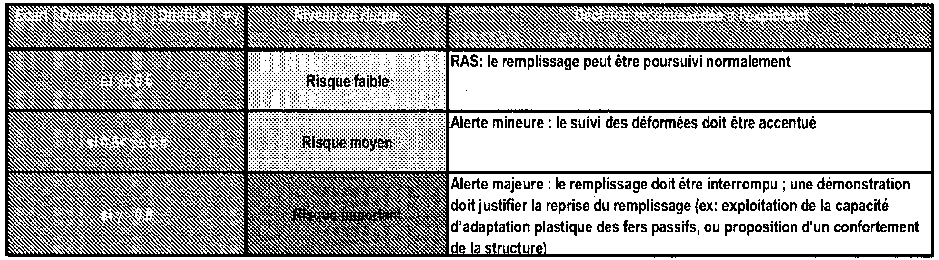

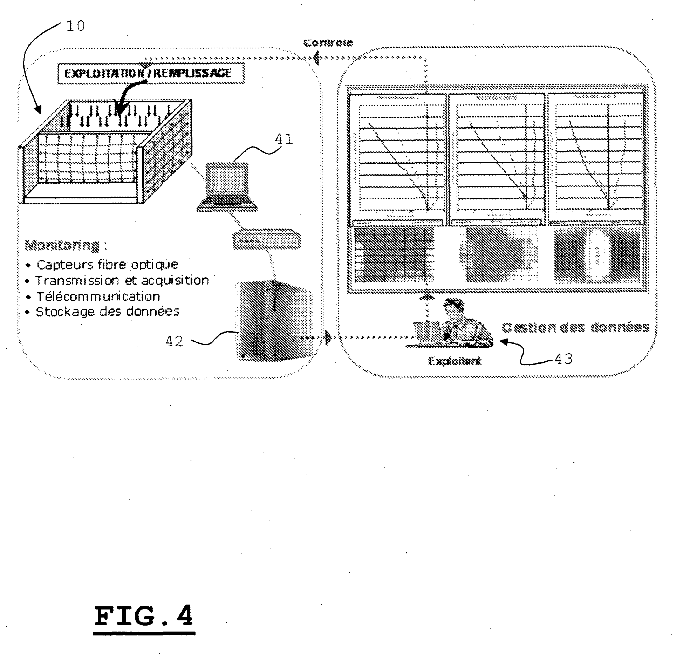

Tel que montré en figure 4, l'exploitant 41, à l'aide de cette approche, dispose ainsi d'indicateurs d'aide à la décision permettant la maîtrise des risques de remplissage d'un ouvrage de confinement 10 et des risques de défaillances de l'ouvrage liés au comportement de l'ouvrage lors de la phase de remplissage. Il dispose de moyens de calculs 42 prévus pour déterminer par simulation le comportement théorique de l'ouvrage pendant une phase de remplissage, des moyens de monitoring prévus pour déterminer le comportement réel de l'ouvrage 10 pendant la phase de remplissage et des moyens de calcul 43 prévus pour déterminer les risques de défaillances ainsi des moyens de proposition d'une solution de sécurisation pour chaque niveau de risque détecté.

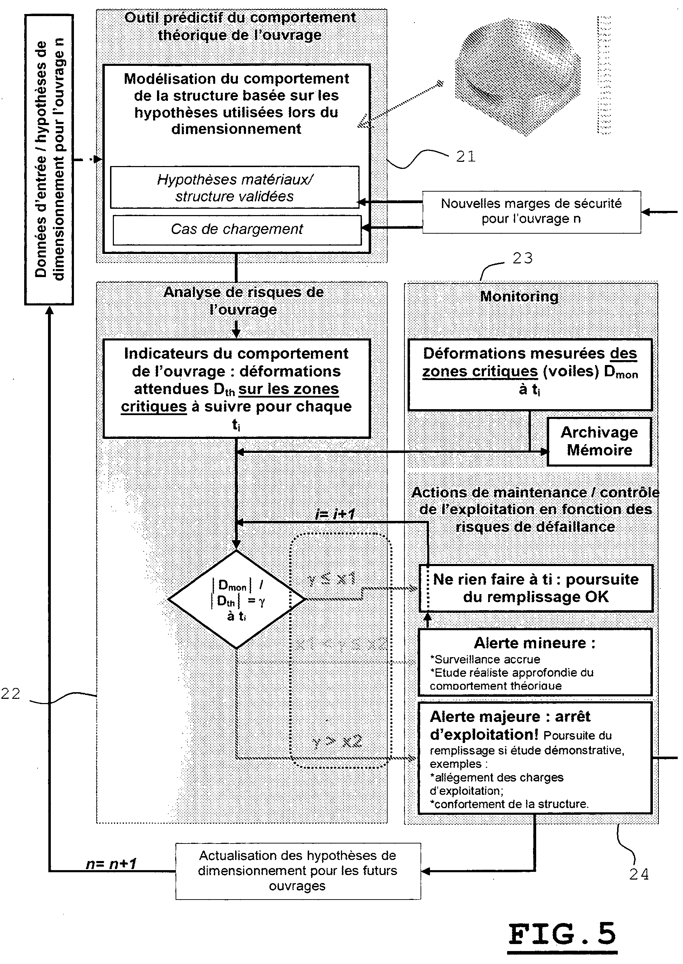

La figure 5 est une représentation de l'organigramme de la figure 2, où la détermination des risques défaillance de l'ouvrage de confinement est concentrée sur des zones critiques préalablement déterminées. Tel qu'indiqué, les déformations attendues sont calculées par l'outil prédictif 21 seulement pour les zones critiques et les déformations réelles sont mesurées au niveau des zones critiques par le module 23 de monitoring grâce aux capteurs 13.

La détermination des zones critiques de l'ouvrage est réalisée via une analyse des risques des différents composants de l'ouvrage. Cette analyse de risques détermine et localise les modes de défaillance les plus critiques de l'ouvrage : elle peut se baser sur une étude du dossier de conception de l'ouvrage par exemple une étude des marges de sécurité prévues à la conception, et/ou sur une étude du dossier de construction de l'ouvrage pouvant mettre en évidence des défauts initiaux, malfaçons, écarts de construction par rapport à la conception de l'ouvrage, et/ou par la prise en compte des données relatives à une expérience sur un ouvrage similaire ou identique, c'est-à-dire des données obtenues sur un ouvrage de confinement similaire ou identique utilisé lors d'une expérience passée, et/ou par une modélisation en éléments finis de l'ouvrage.

La détermination des zones critiques peut être réalisée parallèlement à la détermination du comportement théorique de l'ouvrage, ou au préalable.

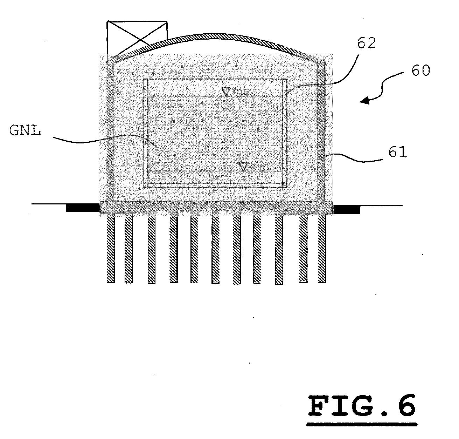

Le procédé selon l'invention peut être appliqué à tout ouvrage de confinement en béton et notamment à des réservoirs de stockage de gaz naturel liquéfié (GNL). La figure 6 est une représentation schématique d'un réservoir 60 de stockage de GNL à intégrité totale. Un tel réservoir 60 est constitué d'un ouvrage de confinement en béton 61 et d'une cuve interne 62 de rétention du GNL. L'ouvrage de confinement en béton 61 a pour fonctions d'éviter :
- le déversement de GNL liquide dans l'environnement en cas de rupture de la cuve interne, et
- les fuites de GNL vapeur dans l'atmosphère.

Un tel ouvrage de confinement 61 est un ouvrage « tampon », c'est-à-dire qu'il permet de réguler le stockage du GNL entre son approvisionnement par des méthaniers et sa distribution progressive vers les consommateurs. Sa durée d'exploitation est généralement de plusieurs dizaines d'années (40 à 60 ans environ).

La cuve interne 62 du réservoir 60 subit des phases irrégulières de remplissage et de désemplissage ou de vidage en fonction du rythme d'approvisionnement et de la demande de distribution. En fonction du remplissage de la cuve interne, le chargement sur les différents composants de l'enceinte externe varie : indirectement via le radier pour les ouvrages autoportants, directement sur les voiles et le radier pour les ouvrages à membrane.

Le procédé selon l'invention permet de déterminer les risques de défaillance d'un tel réservoir de GNL en réalisant un monitoring de l'ouvrage lors de chaque phase de remplissage du réservoir et, éventuellement, lors de chaque phase de vidage du réservoir.

Bien sûr, l'invention n'est pas limitée à l'exemple qui vient d'être décrit et de nombreux aménagements peuvent être apportés à cet exemple sans sortir du cadre de l'invention telle que revendiquée.

## Revendications

1. Procédé d'identification de risques de défaillance d'un ouvrage de confinement (10), notamment d'un ouvrage de confinement essentiellement en béton, destiné à stocker ou à entreposer un produit, ledit procédé comprenant les étapes suivantes :
- détermination, en fonction de données relatives audit ouvrage (10) et/ou audit produit, d'un comportement théorique prévu dudit ouvrage (10) lors d'une phase de remplissage dudit ouvrage (10) par ledit produit à stocker ;
- détermination d'un comportement réel dudit ouvrage (10) lors de ladite phase de remplissage dudit ouvrage (10) par ledit produit ; et
- détermination, par comparaison desdits comportements théorique et réel, des risques de défaillance dudit ouvrage (10).

2. Procédé selon la revendication 1, **caractérisé en ce qu'**il comprend une détermination d'au moins une zone critique de l'ouvrage par étude d'un dossier de conception et/ou de construction de l'ouvrage, et/ou sur des données relatives à une expérience sur un ouvrage similaire ou identique.

3. Procédé selon la revendication 2, **caractérisé en ce que** la détermination du comportement théorique et réel de l'ouvrage (10) pendant la phase de remplissage est réalisée pour une ou plusieurs zones critiques de l'ouvrage préalablement déterminées.

4. Procédé selon l'une quelconque des revendications précédentes, **caractérisé en ce que** la détermination du comportement théorique de l'ouvrage (10) comprend au moins une simulation dudit comportement théorique réalisée dans des moyens de simulation (21).

5. Procédé selon l'une quelconque des revendications précédentes, **caractérisé en ce que** la détermination du comportement réel de l'ouvrage (10) comprend au moins une mesure dudit comportement réel réalisée sur ledit ouvrage (10) lors du remplissage dudit ouvrage (10) par le produit à stocker.

6. Procédé selon l'une quelconque des revendications précédentes, **caractérisé en ce que** la détermination du comportement théorique et/ou réel de l'ouvrage (10) comprend une détermination d'au moins une déformation (D_{th,} Dₘₒₙ) d'au moins un composant (12) dudit ouvrage (10) lors de la phase de remplissage.

7. Procédé selon la revendication 6, **caractérisé en ce que** la déformation comprend au moins une déformation élastique d'au moins un composant (12) de l'ouvrage (10).

8. Procédé selon la revendication 7, **caractérisé en ce que** l'étape de détermination du comportement réel de l'ouvrage (10) comprend une mesure d'une déformation élastique par des capteurs (13) adéquatement placés sur ledit ouvrage (10).

9. Procédé selon l'une quelconque des revendication 6 à 8, **caractérisé en ce que** la déformation comprend une déformation par micro dégradation d'au moins un composant (12) dudit ouvrage (10).

10. Procédé selon la revendication 9, **caractérisé en ce que** l'étape de détermination du comportement réel de l'ouvrage (10) comprend au moins une mesure acoustique d'une déformation par micro dégradation.

11. Procédé selon l'une quelconque des revendications précédentes, **caractérisé en ce qu'**il comprend en outre une étape de proposition d'une solution de sécurisation dudit ouvrage (10) en fonction des risques de défaillance déterminés.

12. Procédé selon l'une quelconque des revendications précédentes, **caractérisé en ce que** les données relatives au audit ouvrage (10) comprennent des données expérimentales relatives à la phase de remplissage d'un ouvrage similaire.

13. Procédé selon l'une quelconque des revendications précédentes, **caractérisé en ce qu'**il comprend un stockage, sur une base de données, d'informations relatives au comportement réel de l'ouvrage (10) lors de la phase de remplissage.

14. Procédé selon l'une quelconque des revendications précédentes, **caractérisé en ce qu'**il est mis en oeuvre pour la détermination de risques de défaillances d'un ouvrage de confinement lors d'une pluralité de phases de remplissage dudit ouvrage.

15. Procédé selon l'une quelconque des revendications précédentes, **caractérisé en ce qu'**il est mis en oeuvre pour l'identification de risques de défaillance d'un ouvrage (10) de confinement de déchets radioactifs.

16. Procédé selon l'une quelconque des revendications précédentes, **caractérisé en ce qu'**il est mis en oeuvre pour l'identification de risques de défaillance d'un réservoir (60) de stockage de gaz naturel liquéfié (GNL) à intégrité totale.

17. Procédé selon l'une quelconque des revendications précédentes, **caractérisé en ce qu'**il comprend en outre une détermination des risques de défaillance lors d'une phase de vidage de l'ouvrage de confinement, les différentes opérations et étapes dudit procédé étant réitérées lors de ladite phase de vidage.

18. Système d'identification de risques de défaillance d'un ouvrage de confinement, notamment d'un ouvrage de confinement (10) essentiellement en béton, destiné à stocker un produit, ledit système comprenant :
- des moyens (21) configurés pour déterminer, en fonction de données relatives audit ouvrage (10) et/ou audit produit, un comportement théorique dudit ouvrage (10) lors d'une phase de remplissage dudit ouvrage (10) par ledit produit à stocker ;
- des moyens (23) configurés pour déterminer un comportement réel dudit ouvrage (10) lors de ladite phase de remplissage dudit ouvrage (10) par ledit produit ; et
- des moyens de calcul (22) configurés pour déterminer, par comparaison desdits comportements théorique et réel, des risques de défaillance dudit ouvrage (10).

19. Système selon la revendication 18, **caractérisé en ce que** les moyens (23) pour déterminer le comportement réel de l'ouvrage (10) comprennent des capteurs (13) prévus pour mesurer une déformation élastique d'au moins un composant (12) dudit ouvrage (10).

20. Système selon la revendication 19, **caractérisé en ce que** les capteurs (13) prévus pour mesurer une déformation élastique comprennent des capteurs de type fibre optique ou clinomètre.

21. Système selon l'une quelconque des revendications 18 à 20, **caractérisé en ce que** les moyens (23) pour déterminer le comportement réel de l'ouvrage (10) comprennent des capteurs (13) prévus pour mesurer une déformation par micro dégradation d'au moins un composant (12) dudit ouvrage (10).

22. Système selon la revendication 21, **caractérisé en ce que** les capteurs (13) prévus pour mesurer une déformation par micro dégradation comprennent des capteurs acoustiques.

## Patentansprüche

1. Verfahren zur Erkennung von Versagensrisiken einer Sicherheitshülle (10), insbesondere einer Sicherheitshülle aus überwiegend Beton, welche für die Einlagerung bzw. die Aufbewahrung eines Produkts bestimmt ist, wobei es folgende Arbeitsschritte umfasst:
- Bestimmung, anhand von Daten über die Hülle (10) und/oder das Produkt, eines vorgesehenen, theoretischen Verhaltens der Hülle (10) in einer Einfüllungsphase der Hülle (10) mit dem zu lagernden Produkt;
- Bestimmung eines reellen Verhaltens der Hülle (10) in der Einfüllungsphase der Hülle (10) durch das Produkt; und
- Bestimmung der Versagensrisiken der Hülle (10) durch Vergleich des theoretischen und des reellen Verhaltens miteinander.

2. Verfahren nach Anspruch 1, **dadurch gekennzeichnet, dass** es eine Bestimmung mindestens eines kritischen Bereichs durch Untersuchung einer Entwurfs- und/oder Konstruktionsspezifikation der Hülle und/oder anhand von Versuchsdaten an einer ähnlichen oder gleichwertigen Hülle umfasst.

3. Verfahren nach Anspruch 2, **dadurch gekennzeichnet, dass** die Bestimmung des theoretischen und reellen Verhaltens der Hülle (10) in der Einfüllungsphase für einen oder mehrere vorab bestimmten kritischen Bereiche der Hülle erfolgt.

4. Verfahren nach einem der vorhergehenden Ansprüche, **dadurch gekennzeichnet, dass** die Bestimmung des theoretischen Verhaltens der Hülle (10) wenigstens eine in einer Simulationseinrichtung (21) durchgeführte Simulation des theoretischen Verhaltens umfasst.

5. Verfahren nach einem der vorhergehenden Ansprüche, **dadurch gekennzeichnet, dass** die Bestimmung des reellen Verhaltens der Hülle (10) wenigstens eine Bemessung des reellen Verhaltens umfasst, die auf der Hülle (10) während der Einfüllung der Hülle (10) mit dem zu lagernden Produkt vorgenommen wird.

6. Verfahren nach einem der vorhergehenden Ansprüche, **dadurch gekennzeichnet, dass** die Bestimmung des theoretischen und/oder reellen Verhaltens der Hülle (10) eine Bestimmung mindestens einer Verformung (D_{th,} Dₘₒₙ) mindestens eines Bauelements (12) der Hülle (10) in der Einfüllungsphase umfasst.

7. Verfahren nach Anspruch 6, **dadurch gekennzeichnet, dass** die Verformung mindestens eine elastische Verformung mindestens eines Bauelements (12) der Hülle (10) umfasst.

8. Verfahren nach Anspruch 7, **dadurch gekennzeichnet, dass** der Arbeitsschritt zur Bestimmung des reellen Verhaltens der Hülle (10) eine Bemessung einer elastischen Verformung durch Sensoren (13) umfasst, welche sachgemäß an der Hülle (10) angeordnet sind.

9. Verfahren nach einem der Ansprüche 6 bis 8, **dadurch gekennzeichnet, dass** die Verformung eine Verformung durch mikrobiologischen Abbau mindestens eines Bauelements (12) der Hülle (10) umfasst.

10. Verfahren nach Anspruch 9, **dadurch gekennzeichnet, dass** der Arbeitsschritt zur Bestimmung des reellen Verhaltens der Hülle (10) mindestens eine akustische Bemessung einer Verformung durch mikrobiologischen Abbau umfasst.

11. Verfahren nach einem der vorhergehenden Ansprüche, **dadurch gekennzeichnet, dass** es außerdem einen Arbeitsschritt zur Unterbreitung einer Lösung zur Sicherung der Hülle (10) entsprechend den bestimmten Versagensrisiken umfasst.

12. Verfahren nach einem der vorhergehenden Ansprüche, **dadurch gekennzeichnet, dass** die Daten über die Hülle (10) Versuchsdaten bezüglich der Einfüllungsphase einer gleichartigen Hülle umfassen.

13. Verfahren nach einem der vorhergehenden Ansprüche, **dadurch gekennzeichnet, dass** es eine Speicherung in einer Datenbank von Angaben über das reelle Verhalten der Hülle (10) in der Einfüllungsphase umfasst.

14. Verfahren nach einem der vorhergehenden Ansprüche, **dadurch gekennzeichnet, dass** es zur Bestimmung von Versagensrisiken einer Sicherheitshülle während einer Vielzahl von Einfüllungsphasen der Hülle eingesetzt wird.

15. Verfahren nach einem der vorhergehenden Ansprüche, **dadurch gekennzeichnet, dass** es zur Erkennung von Versagensrisiken einer Sicherheitshülle (10) für radioaktive Abfälle eingesetzt wird.

16. Verfahren nach einem der vorhergehenden Ansprüche, **dadurch gekennzeichnet, dass** es zur Erkennung von Versagensrisiken eines Behälters (60) zur Lagerung von Flüssigerdgas (LNG) mit vollständiger Integrität eingesetzt wird.

17. Verfahren nach einem der vorhergehenden Ansprüche, **dadurch gekennzeichnet, dass** es außerdem eine Bestimmung der Versagensrisiken in einer Entleerungsphase der Sicherheitshülle umfasst, wobei die verschiedenen Arbeitsvorgänge und -schritte des Verfahrens während der Entleerungsphase wiederholt werden.

18. System zur Erkennung des Versagensrisikos einer Sicherheitshülle, insbesondere einer Sicherheitshülle (10) überwiegend aus Beton, welche für die Einlagerung eines Produkts bestimmt ist, wobei das System umfasst:
- Mittel (21), derart ausgebildet, um anhand von Daten über die Hülle (10) und/oder das Produkt ein theoretisches Verhalten der Hülle (10) in einer Einfüllungsphase der Hülle (10) mit dem zu lagernden Produkt zu bestimmen;
- Mittel (23), derart ausgebildet, um ein reelles Verhalten der Hülle (10) in der Einfüllungsphase der Hülle (10) mit dem Produkt zu bestimmen; und
- Berechnungsmittel (22), derart ausgebildet, um durch Vergleich des theoretischen und des reellen Verhaltens miteinander die Versagensrisiken der Hülle (10) zu bestimmen.

19. System nach Anspruch 18, **dadurch gekennzeichnet, dass** die Mittel (23) zur Bestimmung des reellen Verhaltens der Hülle (10) Sensoren (13) umfassen, die zur Bemessung einer elastischen Verformung mindestens eines Bauelements (12) der Hülle (10) vorgesehen sind.

20. System nach Anspruch 19, **dadurch gekennzeichnet, dass** die zur Bemessung einer elastischen Verformung vorgesehenen Sensoren (13) Sensoren vom Typ Lichtwellenleiter oder Klinometer umfassen.

21. System nach einem der vorhergehenden Ansprüche 18 bis 20, **dadurch gekennzeichnet, dass** die Mittel (23) zur Bestimmung des reellen Verhaltens der Hülle (10) Sensoren (13) umfassen, die zur Bemessung einer Verformung durch mikrobiologischen Abbau mindestens eines Bauelements (12) der Hülle (10) vorgesehen sind.

22. System nach Anspruch 21, **dadurch gekennzeichnet, dass** die zur Bemessung einer Verformung durch mikrobiologischen Abbau vorgesehenen Sensoren (13) akustische Sensoren umfassen.

## Claims

1. Method of identifying the risks of failure of a containment structure (10), in particular a containment structure essentially made of concrete, intended for the storage or intermediate storage of a product, said method comprising the following stages:
- determination, as a function of data relating to said structure (10) and/or said product, of an expected theoretical behaviour of said structure (10) during a phase of filling said structure (10) with said product to be stored;
- determination of an actual behaviour of said structure (10) during said phase of filling said structure (10) with said product; and
- determination, by comparison of said theoretical and actual behaviours, of the risks of failure of said structure (10).

2. Method according to claim 1, **characterized in that** it comprises determination of at least one critical zone of the structure by study of a design and/or construction dossier of the structure, and/or of data relating to an experiment on a similar or identical structure.

3. Method according to claim 2, **characterized in that** the determination of the theoretical and actual behaviour of the structure (10) during the filling phase is carried out for one or more previously determined critical zones of the structure.

4. Method according to any one of the previous claims, **characterized in that** the determination of the theoretical behaviour of the structure (10) comprises at least one simulation of said theoretical behaviour carried out in simulation means (21).

5. Method according to any one of the previous claims, **characterized in that** the determination of the actual behaviour of the structure (10) comprises at least one measurement of said actual behaviour carried out on said structure (10) during the filling of said structure (10) with the product to be stored.

6. Method according to any one of the previous claims, **characterized in that** the determination of the theoretical and/or actual behaviour of the structure (10) comprises determination of at least one deformation (D_{th,} Dₘₒₙ) of at least one component (12) of said structure (10) during the filling phase.

7. Method according to claim 6, **characterized in that** the deformation comprises at least one elastic deformation of at least one component (12) of the structure (10).

8. Method according to claim 7, **characterized in that** the stage of determination of the actual behaviour of the structure (10) comprises a measurement of an elastic deformation by sensors (13) appropriately placed on said structure (10).

9. Method according to any one of claims 6 to 8, **characterized in that** the deformation comprises deformation by micro-degradation of at least one component (12) of said structure (10).

10. Method according to claim 9, **characterized in that** the stage of determination of the actual behaviour of the structure (10) comprises at least one acoustic measurement of deformation by micro-degradation.

11. Method according to any one of the previous claims, **characterized in that** it also comprises a stage of proposing a solution for safeguarding said structure (10) as a function of the determined risks of failure.

12. Method according to any one of the previous claims, **characterized in that** the data relating to said structure (10) includes experimental data relating to the filling phase of a similar structure.

13. Method according to any one of the previous claims, **characterized in that** it comprises storage, in a database, of information relating to the actual behaviour of the structure (10) during the filling phase.

14. Method according to any one of the previous claims, **characterized in that** it is implemented in order to determine the risks of failure of a containment structure during a plurality of filling phases of said structure.

15. Method according to any one of the previous claims, **characterized in that** it is implemented in order to identify the risks of failure of a radioactive waste confinement structure (10).

16. Method according to any one of the previous claims, **characterized in that** it is implemented in order to identify the risks of failure of a total integrity liquefied natural gas (LNG) storage tank (60).

17. Method according to any one of the previous claims, **characterized in that** it also comprises determination of the risks of failure during an evacuation phase of the containment structure, the different operations and stages of said method being reiterated during said evacuation phase.

18. System of identifying the risks of failure of a containment structure, in particular a containment structure (10) essentially made of concrete, intended for storing a product, said system comprising:
- means (21) configured for determining, as a function of data relating to said structure (10) and/or said product, a theoretical behaviour of said structure (10) during a phase of filling said structure (10) with said product to be stored;
- means (23) configured for determining an actual behaviour of said structure (10) during said phase of filling said structure (10) with said product; and
- calculation means (22) configured for determining, by comparison of said theoretical and actual behaviours, the risks of failure of said structure (10).

19. System according to claim 18, **characterized in that** the means (23) of determining the actual behaviour of the structure (10) include sensors (13) provided for measuring an elastic deformation of at least one component (12) of said structure (10).

20. System according to claim 19, **characterized in that** the sensors (13) provided for measuring elastic deformation include optical fibre or clinometer type sensors.

21. System according to any one of claims 18 to 20, **characterized in that** the means (23) of determining the actual behaviour of the structure (10) include sensors (13) provided for measuring deformation by micro-degradation of at least one component (12) of said structure (10).

22. System according to claim 21, **characterized in that** the sensors (13) provided for measuring deformation by micro-degradation include acoustic sensors.
